# EUROPEAN PATENT SPECIFICATION

(11) **EP 0 894 410 B1**
(45) Date of publication and mention of the grant of the patent: **25.08.2004**
(21) Application number: 97907523.1
(22) Date of filing: 07.03.1997
(51) Int. Cl.: H04Q 7/32, H04Q 7/38

(54) **METHOD AND DEVICE AT A MULTISUBSCRIPTION TERMINAL FOR SELECTING AN ACCESS NETWORK IN A MULTINETWORK ENVIRONMENT**
VERFAHREN UND EINRICHTUNG ZUR AUSWAHL EINES ZUGANGSNETZES IN EINER MULTI-NETZ UMGEBUNG FÜR MULTI-ABONNEMENT ENDGERÄT
PROCEDE ET DISPOSITIF RELATIFS A UN TERMINAL A ABONNEMENTS MULTIPLES SERVANT A SELECTIONNER UN RESEAU D'ACCES DANS UN ENVIRONNEMENT MULTIRESEAUX

(30) Priority: 24.04.1996 SE 9601559
(43) Date of publication of application: 03.02.1999
(73) Proprietor: TELIA AB, 123 86 Farsta (SE)
(72) Inventor: LIND, Patric, S-223 61 Lund (SE)
(74) Representative: Akerman, Marten Lennart
(86) International application number: PCT/SE1997/000389
(87) International publication number: WO 1997/040638

(56) References cited:
- GB-A- 2 284 964
- US-A- 5 260 988
- US-A- 5 355 517
- US-A- 5 586 338

## Description

### TECHNICAL FIELD

The present invention relates to a device and a method at a multisubscription terminal in a digital mobile telecommunications system or data communications system for use in multinetwork environments.

### PRIOR ART

Wireless terminals based on the DECT-standard and its Generic Access Profile (GAP) are made possible to use in a number of different environments together with base stations and radio switches which have been connected to different public or private networks. To make it possible to use the terminal to a certain fixed radio equipment is required that the terminal has the access right key (PARK) which is required to be used to the system in question. A terminal can have a multiple of identities (IPUI), and each identity can be connected to a multiple of access right keys. A pair of a portable identity and an access right key is here called a subscription. Based on a subscription, the terminal can make access to only one network, whereas access to a multiple of networks can be made, based on the same IPUI. This is different from corresponding GSM-case where there is only one identity in the terminal (on the SIM-card) based on which the GSM-terminal can make access to a multiple of networks.

A terminal with a multiple of subscriptions can be used to a multiple of access networks, but there is nowhere described how it shall act when it is within coverage from a multiple of access networks at the same time. Both the user of the terminal and operators consequently should be interested in that there is possibility to control how the terminal shall select network in situations when there are a multiple of different access networks to which the terminal can lock itself. It can, for instance, be desirable that a wireless telephone, which also can be used outdoors to a public coverage in the first place shall lock itself to the home base it belongs to, even if the received signal strength from the public base station is higher than the received signal strength from the homebase.

The problem the invention intends to solve, consequently is to produce a device and method which makes it possible to control how the terminal shall select network in situations when there are a multiple of different access networks within the coverage to which the terminal can lock itself.

Examples of multisubscription terminals which must be able to manage this described problem are:
- DECT GAP-terminals. A DECT-terminal based on DECT's Generic Access Profile is made to be used to different networks and also shall be able to manage a multiple of identities. For instance a private subscription to home base and a public subscription for a "telecommunication zone"-like service.
- DECT/GSM IWP-terminal which uses DECT/GSM Interworking Profile to utilize GSM-services over DECT's radio route. This terminal has GSM-subscription on SIM-cards or DAM-cards with GSM-application. Because DECT/GSM IWP is based on GAP, the terminal also shall be possible to use to DECT GAP-system and consequently is faced with the same problem as the DECT GAP-terminal. The GSM-subscription is here handled in the same way as the "GAP-subscriptions" by means of special values of IPUI and PARK.
- Combination terminals DECT+GSM. A combination terminal is a terminal consisting of a GSM-terminal and a DECT-terminal with shell and user-interface in common. The DECT-part shall have the same functionality as a DECT/GSM IWP-terminal. The combination terminal can in an automatic mode change between working as a DECT-terminal depending on accessible networks.

Yet there is no description of how coming DECT GAP-terminals will handle the above described problems with selection of networks. There are indications from manufacturers that they want opinions about how the terminals shall act.

The first delivered combination terminal can in one mode automatically select between working as a GSM-terminal or a DECT-terminal. This choice is not based on subscription in the terminal and cannot be generalized to personal priority lists in multinetwork environments.

A GSM-telephone has a similar algorithm for selection of operator abroad. This is based on only one subscription and its use in different networks. Because the GSM-network aims at being completely covering, selection of networks however does not occur very often, and the GSM-algorithm is not sufficently detailed and flexible to solve the problem which is treated in this patent application. Possibly there are more detailed algorithms for use in multiband-terminals GSM/DCS 1800, but also these are probably based on one subscription.

GB-A-2 284 964 discloses a device at a multisubscription terminal in a digital mobile telecommunications system or data communications system for use in multinetwork environments, that includes a network selection algorithm which describes how a multisubscription terminal shall act when said terminal has possibility to lock itself to a multiple of access networks, a number of possible priority lists which indicate the order of priority of the subscriptions of the terminal or identities connected to said multiple of access networks, at which the user or the operator himself/herself can indicate his/her priority preferences, and means to listen for and evaluate a multiple of different access networks at the same time, and evaluate them with regard to priority.

US-A-5,260,988 discloses a multisubscription terminal in a digital mobile telecommunications system which includes means to listen for and evaluate a multiple of access networks at the same time, and evaluate the with regard to quality in addition to priority.

### SUMMARY OF THE INVENTION

The aim with the present invention consequently is to solve above mentioned problems and implement the technical solution in the described terminals.

This aim is achi.eved with one in the telecommunication terminal co-operative device and a method according to the independent claims.

Further characteristics of the present invention is given below in the dependent patent claims.

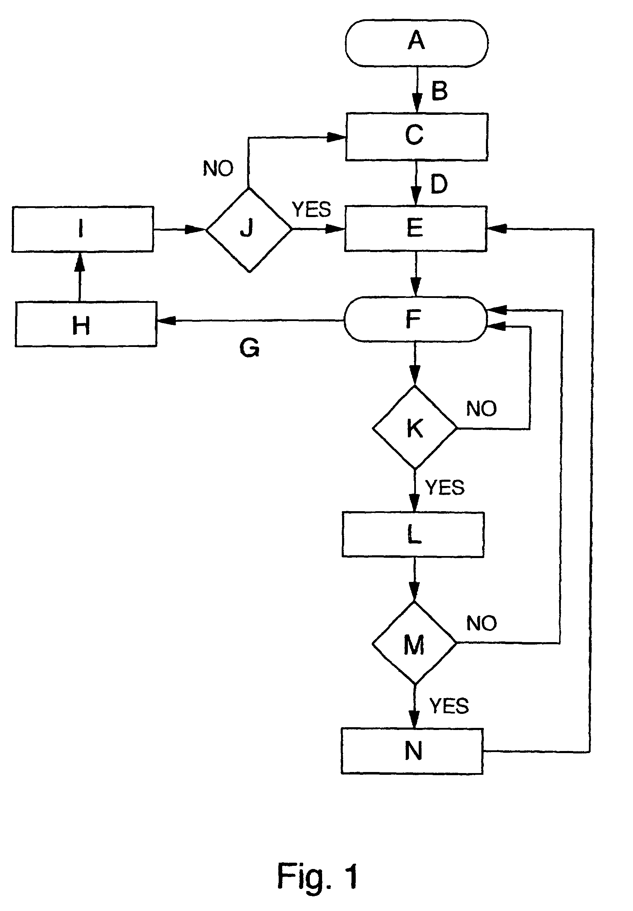

### BRIEF DESCRIPTION OF THE DRAWING

In the following is given a detailed embodiment of the invention with reference to the only figure which shows a flow chart of the network algorithm which is utilized by the device in the multisubsciption terminal.
- A =: Off
- B =: Power Switched on
- C =: Evaluate
- D =: Select new channel
- E =: Attach
- F =: Registered
- G =: Losing coverage
- H =: Detach (2)
- I =: Wait (2)
- J =: New network accessible ?
- K =: New network with higher priority.
- L =: Wait (1)
- M =: High priority network still accessible ?
- N =: Detach (1)

### DETAILED DESCRIPTION OF AN EMBODIMENT OF THE INVENTION

The invention consists of :
- A network selection algorithm which describes how a multisubsciption terminal shall act when it has possibility to lock to a multiple of different networks;
- a number of possible priority lists (lists which indicate the order of priority of the subscriptions of the terminal or identities) where the user (or the operator) can indicate his/her preferences.
- the possibilities of a DECT-terminal to listen for and identify a multiple of different systems at the same time, and evaluate them with regard to quality and priority.

The invention is to be regarded as an invention for DECT-terminals which can be extended to be used also for combination terminals. It is probably different functional units in the terminal that control the network selection in the DECT-terminals compared with the combination terminal. In the combination terminal the unit shall, in addition to the selection of the best network based on the subscriptions of the terminal, also control two radio transmitters/receivers.

In the following description of the invention, the DECT-terminal is used for the DECT GAP-terminal, the DECT GSM IWP-terminal and the combination terminal when it is used as a GSM-terminal.

The algorithm which describes how the terminal shall act when it has possibility to lock itself to a multiple of different access networks now will be described with reference to the only figure.

The values of the used parameters x and y shall be selected sufficiently small to avoid that the terminals are unaccessible too long, and sufficiently big to avoid that the terminals try to attach/detach too often when they are in the border area between two networks. Initially the values 5 seconds for x and 30 seconds for y can be regarded as reasonable.

### From

The terminal is switched off. When the terminal is switched on, it changes to the "evaluation"-mode.

### Evaluate

The terminal scans the usable channels, identifies the different systems that are sufficiently good, and creates a list over accessible networks. A DECT-network is identified by means of the ARI (Acess Rights Identifier) the system transmits. The combination terminal also tries to find accessible GSM-networks. The list over accessible networks is then evaluated by means of the active priority list. That network, out of the accessible networks, is selected which is on the top of the priority list.

### Attachment

The terminal attaches to the selected network to show that it is active. The DECT-terminal makes this by transmitting LOCATE-REQUEST, and the combination terminal makes use of GSM's *location updating* or IMSI *attach* procedures over GSM's radio interface. After this the terminal changes to the registered mode.

### Registered

This is the normal switched-on mode of the terminal. It is registered as active user in the selected network. Because it is a mobile terminal, it will continuously evaluate received signal strengths in order to secure that the best channel, or the highest prioritized channel, is used.

The terminal scans the usable channels, identifies the different systems that are received sufficiently well and creates a list over accessible networks. The list over accessible networks then is evaluated by means of the active priority list. If no network with higher priority than that in which the network already is registered is found, the terminal remains being registered in the same network. If a network with higher priority is found, the network changes to "wait"-(1)-mode.

If the terminal during the evaluation of the radio channels in the "registered"-mode finds that the signal strength from the selected network is going down below a limit, the terminal shall change to the "detach"-(2)-mode.

### Wait (1)

In order to secure that the reception from the new network was not temporary, the terminal continues evaluating the usable channels, and if the reception from the new network with higher priority is still there after x seconds, the terminal switches to the "detach"-(1)-mode. Otherwise the terminal switches back to the "registered"-mode and remains registered in the same network as before.

### Detach (1)

The terminal "detaches" from the network in which it was registered. The DECT-terminal makes this by transmitting DETACH, and the combination terminal makes use of GSM's IMSI "detach"-procedure over the GSM's radio interface. The terminal after that switches to "attach"-mode where it "attaches" to the new network with higher priority.

### Detach (2)

If the terminal in the mode "registered" finds that the received signal strength is going down below a limit, the terminal shall try to "detach" in the same way as in "detach" (1), in order to after that switch to the "wait"-(2)-mode. For the DECT-terminal the limit of the received signal strenght is -86 dBm, whereas it for the combination terminal is up to the GSM-part to decide when the reception is too poor.

### Wait (2)

In order to secure that the loss of the reception from the old network was not temporary, the terminal continues evaluating the reception from the old network, and if it is still there after x seconds, the terminal switches to the "attach"-mode where it attaches to the old network. If the reception from the old network is still lacking after the x seconds, the terminal switches to the "evaluating"-mode in order to start trying to find a new network.

After the terminal has changed network, there shall pass at least y seconds, after the change, before it for some reason tries to change back to the first network again. This in order to prevent unnecessary signalling and registration when the terminal is in the border area between two networks.

The described algorithm implies that the terminal selects the network which the user has given the highest priority as long as the quality is over minimum. An extended algorithm gives the user possibility to select between using the network which has been given the highest priority in the priority list, or use the network where the best reception quality can be obtained (the order in the priority list will come second).

In the following the priority lists are described which are utilized in the "registered"-mode in the flow chart according to the Figure.

For the lists which are used to indicate the priority of the networks the terminal can access, there are two main types: Priority lists based on the subscription of the terminal, and priority lists based on a few types of networks. The subscriptions in the terminal can be on SIM-cards (GSM) and DAM-cards (DECT) and in the hardware memory of the terminal. Also the priority lists of the terminal can be stored both on cards and in the memory of the terminal.

The most simple priority list is based on different types of networks: Private (home or company) DECT-networks, public DECT-networks and DECT/GSM-access networks (DECT access to the GSM network). These different types can be read as access right class in the access right key. For the combination terminal there will, in addition, be GSM-access to the GSM-network. There is required a special mechanism in the combination terminal to control the priority between the DECT-part and the GSM-part. A priority list based on these four types of networks should be as default in the terminal with the order of preference:
1. Private DECT-network.
2. Public DECT-network.
3. DECT/GSM-access network.
4. GSM-network.

This order of preference gives for the operator the best utilization of the capacity in the network and, for the user, probably the most economical high quality service access.

The most advanced priority list is based on the subscriptions of the terminal and gives the user the most flexible possibility to control the selection of network of his/her terminal. A DECT-subscription is here regarded as a pair of a terminal identity (IPUI) and an access right key (PARK) and gives the user possibility to place in order of preference all networks (also different access networks at the same operator as long as they have different access right identifiers, ARI) which the terminal is allowed to be used to. A possible GSM-subscription is used in the user interface of the terminal as a DECT-subscription. In the DECT-terminal the GSM-subscription is used as a DECT-subscription with a special IPUI, whereas it in the combination terminal is required a special implementation.

As complement to these two main types, one may imagine other types of priority lists. Especially, one may imagine priority lists with different levels. One possible list may be based on the IPUIs of the terminal in the first place, and after that on the PARKs which have been connected to this IPUI. Another similar possibility is to base the priority on operators in the first place, and the of the operator's access networks which are accessible in the second place. The operator's identity can for instance be read from PARK. The user also can be imagined to group the subscriptions in, for instance, a private role and a service role. When one of these roles is activated, the terminal changes in the first place network, based on the subscriptions connected to this role, and in the second place to networks connected to the second role.

The described invention can, as has been described, be used in at least three types of terminals. These are:
- DECT GAP-terminals. The problem is framed on basis of the possibilities which exist for terminals based on DECT GAP.
- DECT/GSM-terminal. DECT/GSM InterWorking Profile (IWP) describes how DECT-systems shall be connected to the GSM-network and how GSM-services shall be possible to be offered over DECT's radio interface. A DECT/GSM-terminal fulfils the requirements from both GAP and DECT/GSM IWP. DECT/GSM IWP is based on GAP, and the DECT/GSM-terminal is faced with the same problems as the GAP-terminal, however with the difference that it also shall be able to handle a GSM-subscription in the same way as the "GAP-subscriptions".
- DECT+GSM combination terminals. A combination terminal consists of both a DECT-terminal and a GSM-terminal with common shell and control. The combination terminal shall handle the same subscriptions as the DECT/GSM-terminal, but also be able to select between using GSM's or DECT's radio interface.

The above described is only to be regarded as an advantageous embodiment of the present invention and the scope of protection of the invention is only defined by what is indicated in the following patent claims.

## Claims

1. Device at a multisubscription terminal in a digital telecommunications system or data communications system for use in multinetwork environments, including:
a network selection algorithm which describes how a multisubscription terminal shall act when said terminal has possibility to lock itself to a multiple of access networks;
a number of possible priority lists which indicate the order of priority of the subscriptions of the terminal or identities connected to said multiple of access networks, at which the user or the operator himself/herself can indicate his/her priority preferences; and
means to listen for and evaluate a multiple of different access networks at the same time, and evaluate them with regard to priority, **characterized in that** said means is configured to evaluate the multiple of different access networks with regard to also quality by performing the steps of:
scanning usable channels, identifying the different networks having a channel with signal strength over a predetermined threshold value, creating a list over accessible networks, evaluating the list over accessible networks by means of a priority list (C) and selecting that network, that out of the accessible networks is on the top of the priority list (D);
attaching the terminal to the selected network (E) and continuously evaluating received signal strengths in order to secure that the highest prioritized network is used;
if a new network with higher priority than the selected network is found (K), evaluating the usable channels in order to secure that the reception from the new network was not temporary, and if the reception from the new network with higher priority is still there after x seconds (M), detaching the terminal from the network to which it is attached, and attaching the terminal to the new network with higher priority (E),
if the terminal finds that the signal strengths from the network to which it is attached is going down below the predetermined threshold value (G), detaching the terminal from the network, and evaluating the reception from the network to which it was attached (J); and
if the signal strength from the network to which it was attached is over the predetermined threshold value after x seconds, attaching the terminal to the network to which it was attached (E) and continuously evaluating received signal strengths in order to secure that the highest prioritized network is used, else waiting at least y seconds and then scanning the usable channels, identifying the different networks having a channel with a signal strength over the predetermined threshold value, creating a list over accessible networks, evaluating the list over accessible networks by means of a priority list (C) and selecting that network, that out of the accessible networks is on the top of the priority list (D).

2. Device according to claim 1, **characterized in that** said priority list is based on few types of access networks, at which at the top in the priority list are private access networks, followed by public access networks, national access networks and global access networks.

3. Device according to claim 1 or 2, **characterized in that** if said terminal is a DECT/GSM-terminal, the access networks are placed in order of preference in the priority list according to: 1) Private DECT-networks; 2) Public DECT-networks; 3) DECT/GSM-networks; 4) GSM-networks.

4. Device according to any of the claims 1 - 3, **characterized in that** said priority list is based on the subscriptions of said terminal, at which each subscription is regarded as a terminal identity and an access right.key, which gives the user or operator himself/herself possibility to place in order of preference all networks to which the terminal is allowed to be used.

5. Device according to any of the claims 1 - 3, **characterized in that** said priority list is based on a private role and a service role, at which, when any of these roles is activated, said terminal changes network based on the subscriptions connected to this role.

6. Device according to any of the previous claims, **characterized in that** said subscription and said priority lists are stored on for the user or the operator unique active cards, preferably DAM-cards or SIM-cards, which cooperates with the electronics of said terminal, and/or are stored in the hardware memory of said terminal.

7. Method at a multisubscription terminal in a digital telecommunications system or data communications system for use in multinetwork environments, wherein a network selection algorithm describes on the basis of priority lists and signal quality in access networks how said terminal shall act when said terminal has possibility to lock itself to a multiple of access networks, at which said priority lists indicate the order of priority of the subscriptions of the terminal or identities connected to said access networks, said method comprising the steps of:
scanning usable channels, identifying the different networks having a channel with signal strength over a predetermined threshold value, creating a list over accessible networks, evaluating the list over accessible networks by means of a priority list (C) and selecting that network, that out of the accessible networks is on the top of the priority list (D);
attaching the terminal to the selected network (E) and continuously evaluating received signal strengths in order to secure that the highest prioritized network is used;
if a new network with higher priority than the selected network is found (K), evaluating the usable channels in order to secure that the reception from the new network was not temporary, and if the reception from the new network with higher priority is still there after x seconds (M), detaching the terminal from the network to which it is attached, and attaching the terminal to the new network with higher priority (E),
if the terminal finds that the signal strengths from the network to which it is attached is going down below the predetermined threshold value (G), detaching the terminal from the network, and evaluating the reception from the network to which it was attached (J); and
if the signal strength from the network to which it was attached is over the predetermined threshold value after x seconds, attaching the terminal to the network to which it was attached (E) and continuously evaluating received signal strengths in order to secure that the highest prioritized network is used, else waiting at least y seconds and then scanning the usable channels, identifying the different networks having a channel with a signal strength over the predetermined threshold value, creating a list over accessible networks, evaluating the list over accessible networks by means of a priority list (C) and selecting that network, that out of the accessible networks is on the top of the priority list (D).

8. Method according to claim 7, **characterized in that** said network selection algorithm describes different modes for said multisubscription terminal, which modes are given by:
a) The *from-mode,* in which said terminal is switched off and which terminal changes to "evaluation" mode when it is switched on;
b) The *evaluation-mode,* in which terminal scans usable channels, identifies different access networks, and creates a list over accessible networks, by which the list over accessible networks is evaluated by means of the active priority list, and that network is selected which is on the top of the priority list;
c) The *attach-mode,* in which said terminal attaches to the in the "evaluation"-mode selected network to show that it is active, at which said terminal changes to the "registered"-mode;
d) The *registered-mode,* in which said terminal is registered as active user of said selected access network, and said terminal continuously scans channels in said access network and evaluates these networks in relation to said priority list and, if no other access network with higher priority than that in which the terminal is already registered is found, the terminal remains being registered in the same network; if a network with higher priority is found, said terminal changes to the "wait"-(1)-mode; if said terminal during evaluation of the radio channels finds that the signal strength from the selected network goes below a predetermined limit, said terminal changes to "detach"-(2)-mode;
e) The *wait-(1)-mode*, in which said terminal secures that reception from new network was not temporary, and if reception from the new network with higher priority still exists after x seconds, said terminal changes to "detach"-(1)-mode; otherwise the terminal goes back to the "registered"-mode and remains registered in the same network as before;
f) The *detach-(1)-mode*, in which said terminal detaches from the old network in which it was registered, after which said terminal changes to "attach"-mode where it attaches to the new network with higher priority;
g) The *detach-(2)-mode*, in which said terminal in the "registered"-mode finds that the received signal strength is going down below a predetermined threshold value and detaches in the same way as in the "detach"-(1)-mode, and after that changes to the "wait"-(2)-mode;
h) The *wait-(2)-mode*, in which said terminal continues evaluating reception from the old network, and if this reception is still there after x seconds, the terminal changes to the "attach"-mode where it attaches to the old network; if reception from the old network is still lacking after x seconds, said terminal changes to the "evaluation-mode in order to start trying to find a new access network.

9. Method according to claim 8, **characterized in that**, after said terminal has changed network, there shall pass at least y seconds, after the change, before it tries changing back to the first network again.

10. Method according to claim 9, **characterized in that** said time variables x respective y are estimated to 5 respective 30 seconds.

## Patentansprüche

1. Vorrichtung an einem Multiabonnement-Endgerät in einem digitalen Telekommunikationssystem oder Datenkommunikationssystem zur Verwendung in Multinetzumgebungen, mit:
einem Netzwählalgorithmus, der beschreibt, wie ein Multiabonnement-Endgerät wirken soll, wenn das Endgerät die Möglichkeit hat, sich selbst in mehrere Zugangsnetze einzuloggen;
einer Anzahl von möglichen Prioritätslisten, die die Reihenfolge der Priorität der Abonnements des Endgerätes oder Identitäten angeben, die an die Anzahl von Zugangsnetzen angeschlossen sind, bei denen der Benutzer oder die Bedienungspersonen selbst ihre Prioritätspreferenzen angeben kann; und
Mittel zum Hören und Bewerten einer Anzahl von unterschiedlichen Zugangsnetzen gleichzeitig und Bewerten desselben mit Bezug auf die Priorität, **dadurch gekennzeichnet, daß** die Mittel so konfiguriert sind, daß sie die Anzahl von unterschiedlichen Zugangsnetzen auch mit Bezug auf die Qualität bewerten, indem die Schritte durchgeführt werden:
Abtasten verwendbarer Kanäle, Identifizieren der verschiedenen Netze, die einen Kanal mit einer Signalstärke oberhalb eines vorbestimmten Schwellwertes haben, Erzeugen einer Liste über zugängliche Netze, Bewerten der Liste über zugängliche Netze mittels einer Prioritätsliste (C) und Wählen des Netzwerkes aus den zugänglichen Netzwerken, das an der Spitze der Prioritätsliste steht (D);
Anschließen des Endgerätes an das gewählte Netz (E) und fortlaufendes Bewerten empfangener Signalstärken, um sicherzustellen, daß das Netz mit der höchsten Priorität verwendet wird;
wenn ein Netz mit einer höheren Priorität als das gewählte Netz gefunden ist (K) Bewerten der verwendbaren Kanäle, um sicherzustellen, daß der Empfang von dem neuen Netz nicht temporär war und wenn der Empfang von dem neuen Netz mit der höheren Priorität auch noch nach x Sekunden vorhanden ist (M), Abschalten des Endgerätes von dem Netz, an welches es angeschlossen war und Anschließen des Endgerätes an das neue Netz mit der höheren Priorität (E)
wenn das Endgerät findet, daß die Signalstärken von dem Netz, an welches es angeschlossen ist, unter den vorbestimmten Schwellwert gehen (G), Abschalten des Endgerätes von dem Netz und Bewerten des Empfangs von dem Netz, an welches es angeschlossen war (J); und
wenn die Signalstärke von dem Netz, an welches es angeschlossen war nach x Sekunden über dem vorbestimmten Schwellwert liegt, Anschließen des Endgerätes an das Netz, an welches es angeschlossen war (E) und kontinuierlich Bewerten der empfangenen Signalstärken, um sicherzustellen, daß das Netz mit der höchsten Priorität verwendet wird, ansonsten warten von wenigstens y Sekunden und nachfolgend Abtasten der verwendbaren Kanäle, Identifizieren der unterschiedlichen Netze, die einen Kanal mit einer Signalstärke über dem vorbestimmten Schwellwert haben, Erzeugen einer Liste über zugängliche Netze, Bewerten der Liste über zugängliche Netze mittels einer Prioritätsliste (C) und Wählen desjenigen Netzes aus den zugänglichen Netzen, das an der Spitze der Prioritätsliste steht (D).

2. Vorrichtung nach Anspruch 1, **dadurch gekennzeichnet, daß** die Prioritätsliste auf wenigen Arten von Zugangsnetzen basiert, wobei an der Spitze der Prioritätsliste private Zugangsnetze, gefolgt von öffentlichen Zugangsnetzen, nationalen Zugangsnetzen und globalen Zugangsnetzen steht.

3. Vorrichtung nach Anspruch 1 oder 2, **dadurch gekennzeichnet, daß** wenn das Endgerät ein DECT/GSM-Endgerät ist, die Zugangsnetze in der Reihenfolge der Preferenz in der Prioritätsliste stehen gemäß: 1) Private DECT-Netze; 2) Öffentliche DECT-Netze; 3) DECT/GSM-Netze; 4) GSM-Netze.

4. Vorrichtung nach einem der Ansprüche 1 bis 3, **dadurch gekennzeichnet, daß** die Prioritätsliste auf den Abonnements dieses Endgerätes basiert, an welchem jedes Abonnement als eine Endgerätidentität und ein Zugangsrechtschlüssel betrachtet wird, was dem Benutzer oder der Bedienungsperson die Möglichkeit gibt, selbst die Reihenfolge der Preferenz aller Netze in welchen das Endgerät verwendet werden darf, zu plazieren.

5. Vorrichtung nach einem der Ansprüche 1 bis 3, **dadurch gekennzeichnet, daß** die Prioritätsliste auf einer privaten Rolle und einer Service-Rolle basiert, wobei, wenn eine dieser Rollen aktiviert ist, das Endgerät das Netzwerk basierend auf den Abonnements, die an diese Rolle angeschlossen sind, ändert.

6. Vorrichtung nach einem der vorstehenden Ansprüche, **dadurch gekennzeichnet, daß** das Abonnement und die Prioritätslisten auf für den Benutzer oder die Bedienungsperson eindeutigen aktiven Karten gespeichert sind, vorzugsweise DAM-Karten oder SIM-Karten, die mit der Elektronik des Endgerätes zusammenwirken und/oder in dem Hardware-Speicher des Endgerätes gespeichert sind.

7. Verfahren an einem Multiabonnement-Endgerät in einem digitalen Telekommunikationssystem oder Datenkommunikationssystem zur Verwendung in Multinetz-Umgebungen, wobei ein Netzwählalgorithmus auf der Basis von Prioritätslisten und der Signalqualität in Zugangsnetzen beschreibt, wie das Endgerät wirken soll, wenn das Endgerät die Möglichkeit hat, sich selbst in eine Anzahl von Zugangsnetzen einzuloggen, wobei die Prioritätslisten die Reihenfolge der Priorität der Abonnements des Endgerätes oder der Identitäten angeben, die an das Zugangsnetz angeschlossen sind, wobei das Verfahren die Schritte aufweist:
Abtasten verwendbarer Kanäle, Identifizieren der unterschiedlichen Netze, die einen Kanal mit einer Signalstärke oberhalb eines vorbestimmten Schwellwertes haben, Erzeugen einer Liste über die zugänglichen Netze, Bewerten der Liste der zugänglichen Netze mittels einer Prioritätsliste (C) und Wählen desjenigen Netzes aus den zugänglichen Netzen, das an der Spitze der Prioritätsliste steht (D);
Anschließen des Endgerätes an das gewählte Netz und fortlaufend Bewerten der empfangenen Signalstärken, um sicherzustellen, daß das Netz mit der höchsten Priorität verwendet wird;
wenn ein neues Netz mit einer höheren Priorität als das gewählte Netz gefunden wird (K), Bewerten der verwendbaren Kanäle, um sicherzustellen, daß der Empfang von dem neuen Netz nicht temporär war, und wenn der Empfang von dem neuen Netz mit der höheren Priorität noch nach x Sekunden vorhanden ist (M), Abschalten des Endgerätes von dem Netz, an welches es angeschlossen war und Anschließen des Netzgerätes an das neue Netz mit der höheren Priorität (E),
wenn das Endgerät herausfindet, daß die Signalstärken von dem Netz, an welches es angeschlossen ist, unter den vorbestimmten Schwellwert fallen (G), Lösen des Endgerätes von dem Netz und Bewerten des Empfangs von dem Netz, an welches es angeschlossen war (J); und
wenn die Signalstärke von dem Netz, an welches es angeschlossen war, nach x Sekunden über dem vorbestimmten Schwellwert liegt, Anschließen des Anschlusses an das Netz, an welches es angeschlossen war (E) und fortlaufend Bewerten der Signalstärken, um sicherzustellen, daß das Netz mit der höchsten Priorität verwendet wird, ansonsten Warten von wenigstens y Sekunden und nachfolgend Abtasten der verwendbaren Kanäle, Identifizieren der verschiedenen Netze, die einen Kanal mit einer Signalstärke oberhalb des vorbestimmten Schwellwertes haben, Erzeugen einer Liste über zugängliche Netze, Bewerten der Liste über zugängliche Netze mittels einer Prioritätsliste (C) und Wählen desjenigen Netzes aus den zugänglichen Netzen, das an der Spitze der Prioritätsliste steht (D).

8. Verfahren nach Anspruch 7, **dadurch gekennzeichnet, daß** der Netzwählalgorithmus unterschiedliche Modi für das Multiabonnement-Endgerät beschreibt, wobei die Modi gegeben sind durch:
a) den Aus-Modus, in welchem das Endgerät ausgeschaltet ist, und bei dem das Endgerät in den "Bewertungs"-Modus umschaltet, wenn es eingeschaltet wird;
b) den Bewertungsmodus, in welchem das Endgerät verwendbare Kanäle abtastet, verschiedene Zugangsnetze identifiziert und eine Liste über zugängliche Netze erzeugt, von dem die Liste über zugängliche Netze mittels der aktiven Prioritätsliste bewertet wird und das Netz gewählt wird, das an der Spitze der Prioritätsliste steht;
c) den Anschlußmodus, in welchem das Endgerät an das in dem "Bewertungs"-Modus gewählte Netz anschließt, um zu zeigen, daß es aktiv ist, wobei das Endgerät in den "Registrierten"-Modus umschaltet;
d) den Registrierter-Modus, in welchem das Endgerät als aktiver Nutzer des gewählten Zugangsnetzes registriert wird und das Endgerät fortlaufend Kanäle in dem Zugangsnetz abtastet und diese Netze in bezug auf die Prioritätsliste bewertet, und wenn kein anderes Netz mit höherer Priorität als diejenige, des Netzes in welchem das Endgerät bereits registriert ist, gefunden wird, bleibt das Endgerät in demselben Netz registriert; wenn ein Netz mit höherer Priorität gefunden wird, schaltet das Endgerät in den "Warte"- (1) - Modus; wenn das Endgerät während der Bewertung der Rundfunkkanäle herausfindet, daß die Signalstärke von dem gewählten Netz unter eine vorbestimmte Grenze fällt, schaltet das Endgerät auf "Trenn"- (2) - Modus;
e) den Warte - (1) - Modus, in welchem das Endgerät sicherstellt, daß der Empfang von dem neuen Netz nicht temporär war, und wenn der Empfang von dem neuen Netz mit höherer Priorität noch nach x Sekunden existiert, schaltet das Endgerät auf den "Trenn" - (1) - Modus; ansonsten geht das Endgerät zurück zu dem "registrierten"-Modus und bleibt in dem gleichen Netz wie zuvor registriert;
f) der Trenn - (1) - Modus, in welchem das Endgerät sich von dem alten Netz trennt, in dem es registriert war, wonach das Endgerät auf den "Anschluß"-Modus umschaltet, in welchem es an das neue Netz mit der höheren Priorität umschaltet;
g) den Trenn - (2) - Modus in welchem das Endgerät in dem "registrierten" Modus herausfindet, daß die empfangene Signalstärke unter einen vorbestimmten Schwellwert fällt und sich auf die gleiche Art und Weise wie im "Trenn"- (1) - Modus trennt und danach auf den "Warte" - (2) - Modus umschaltet;
h) den Warte - (2) - Modus, in welchem das Endgerät fortfährt, den Empfang vom alten Netz zu bewerten und wenn dieser Empfang noch nach x Sekunden vorhanden ist, schaltet das Endgerät auf den "Trenn" - Modus um, in welchem es an das alte Netz anschließt; wenn der Empfang von dem alten Netz noch nach x Sekunden fehlerhaft ist, schaltet das Endgerät auf den "Bewertung"- Modus um, um den Versuch ein neues Zugangsnetz zu finden zu starten.

9. Verfahren nach Anspruch 8, **dadurch gekennzeichnet, daß** nachdem das Endgerät das Netz geändert hat, nach der Änderung wenigstens y Sekunden vergehen sollen, bevor es wiederum versucht zurück zu dem ersten Netz zu gehen.

10. Verfahren nach Anspruch 9, **dadurch gekennzeichnet, daß** die Zeitvariablen x bzw. y auf 5 bzw. 30 Sekunden bemessen sind.

## Revendications

1. Dispositif dans un terminal à abonnements multiples d'un système de télécommunication numérique ou d'un système de communication de données utilisable dans des environnements multiréseaux, comprenant :
un algorithme de sélection de réseau qui décrit la façon dont un terminal à abonnements multiples agit lorsque le dit terminal a la possibilité de s'accrocher à une pluralité de réseaux d'accès ;
une pluralité de listes de priorité possibles qui indiquent l'ordre de priorité des abonnements du terminal ou des identités connectés à la dite pluralité de réseaux d'accès, dans lesquelles l'utilisateur ou l'opérateur lui-même peut indiquer ses préférences de priorité ; et
des moyens d'écoute et d'évaluation d'une pluralité de réseaux d'accès différents en même temps, et d'évaluation de ces réseaux en ce qui concerne la priorité,
**caractérisé en ce que** les dits moyens sont configurés pour évaluer la pluralité de réseaux d'accès différents en ce qui concerne également la qualité, par exécution des étapes de :
balayage des canaux utilisables, identification des différents réseaux ayant un canal avec une intensité de signal supérieure à une valeur de seuil prédéterminée, création d'une liste relative aux réseaux accessibles, évaluation de la liste relative aux réseaux accessibles au moyen d'une liste de priorité (C) et sélection du réseau, parmi les réseaux accessibles, qui est sur le dessus de la liste de priorité (D) ;
connexion du terminal au réseau sélectionné (E) et évaluation de façon continue des intensités des signaux reçus, afin de s'assurer que le réseau de plus haute priorité est utilisé ;
si on trouve (K) un nouveau réseau de plus grande priorité que le réseau sélectionné, évaluation des canaux utilisables afin de vérifier que la réception en provenance du nouveau réseau n'était pas temporaire et, si la réception en provenance du nouveau réseau de plus haute priorité est encore présente après x secondes (M), déconnexion du terminal du réseau auquel il est connecté et connexion du terminal au nouveau réseau de plus haute priorité (E),
si le terminal trouve que les intensités de signal en provenance du réseau auquel il est connecté diminuent au-dessous de la valeur de seuil prédéterminée (G), déconnexion du terminal du réseau et évaluation de la réception en provenance du réseau auquel il était connecté (J) ; et
si l'intensité de signal en provenance du réseau auquel il était connecté est supérieure à la valeur de seuil prédéterminée après x secondes, connexion du terminal au réseau auquel il était connecté (E) et évaluation de façon continue des intensités des signaux reçus afin de s'assurer que le réseau de plus haute priorité est utilisé, et sinon attente pendant au moins y secondes puis balayage des canaux utilisables, identification des différents réseaux ayant un canal avec une intensité de signal supérieure à la valeur de seuil prédéterminée, création d'une liste relative aux réseaux accessibles, évaluation de la liste relative aux réseaux accessibles au moyen d'une liste de priorité (C) et sélection du réseau, parmi les réseaux accessibles, qui est sur le dessus de la liste de priorité (D).

2. Dispositif selon la revendication 1, **caractérisé en ce que** la dite liste de priorité est basée sur quelques types de réseaux d'accès, dans lesquels, sur le dessus de la liste de priorité, il y a des réseaux d'accès privés, suivis par des réseaux d'accès publics, des réseaux d'accès nationaux et des réseaux d'accès globaux.

3. Dispositif selon la revendication 1 ou 2, **caractérisé en ce que**, si le dit terminal est un terminal DECT/GSM, les réseaux d'accès sont placés dans un ordre de préférence dans la liste de priorité conformément à : (1) réseaux DECT privés ; (2) réseaux DECT publics; (3) réseaux DECT/GSM; (4) réseaux GSM.

4. Dispositif selon une quelconque des revendications 1 à 3, **caractérisé en ce que** la dite liste de priorité est basée sur les abonnements du dit terminal, chaque abonnement étant constitué par une identité de terminal et une clé d'accès correcte, ce qui donne à l'utilisateur ou à l'opérateur lui-même la possibilité de placer dans un ordre de préférence tous les réseaux avec lesquels le terminal peut être utilisé.

5. Dispositif selon une quelconque des revendications 1 à 3, **caractérisé en ce que** la dite liste de priorité est basée sur un rôle privé et un rôle de service, de sorte que, lorsqu'un quelconque de ces rôles est activé, le dit terminal change de réseau sur la base des abonnements connectés à ce rôle.

6. Dispositif selon une quelconque des revendications précédentes, **caractérisé en ce que** le dit abonnement et les dites listes de priorité sont stockés sur des cartes actives spécifiques de l'utilisateur ou de l'opérateur, de préférence des cartes DAM ou des cartes SIM, qui coopèrent avec les circuits électroniques du dit terminal, et/ou sont stockés dans la mémoire matérielle du dit terminal.

7. Procédé dans un terminal à abonnements multiples d'un système de télécommunication numérique ou d'un système de communication de données utilisable dans des environnements multiréseaux, dans lequel un algorithme de sélection de réseau décrit, sur la base de listes de priorité et de qualité de signal dans des réseaux d'accès, la façon dont le dit terminal agit lorsque le dit terminal a la possibilité de s'accrocher à une pluralité de réseaux d'accès, dans lequel les dites listes de priorité indiquent l'ordre de priorité des abonnements du terminal ou des identités connectés aux dits réseaux d'accès, le dit procédé comprenant les étapes de :
balayage des canaux utilisables, identification des différents réseaux ayant un canal avec une intensité de signal supérieure à une valeur de seuil prédéterminée, création d'une liste concernant les réseaux accessibles, évaluation de la liste concernant les réseaux accessibles au moyen d'une liste de priorité (C) et sélection du réseau, parmi les réseaux accessibles, qui est sur le dessus de la liste de priorité (D) ;
connexion du terminal au réseau sélectionné (E) et évaluation de façon continue des intensités des signaux reçus afin de s'assurer que le réseau de plus haute priorité est utilisé ;
si un nouveau réseau de plus haute priorité que le réseau sélectionné est trouvé (K), évaluation des canaux utilisables afin de s'assurer que la réception en provenance du nouveau réseau n'était pas temporaire et, si la réception en provenance du nouveau réseau de plus haute priorité est encore présente après x secondes (M), déconnexion du terminal du réseau auquel il est connecté et connexion du terminal au nouveau réseau de plus haute priorité (E) ;
si le terminal trouve que les intensités de signal en provenance du réseau auquel il est connecté diminuent au-dessous de la valeur de seuil prédéterminé G, déconnexion du terminal du réseau, et évaluation de la réception en provenance du réseau auquel il était connecté (J) ; et
si l'intensité de signal en provenance du réseau auquel il était connecté est supérieure à la valeur de seuil prédéterminée après x seconde, connexion du terminal au réseau auquel il était connecté (E) et évaluation de façon continue des intensités des signaux reçus afin de s'assurer que le réseau de plus haute priorité est utilisé, sinon attente pendant au moins y secondes puis balayage des canaux utilisables, identification des différents réseaux ayant un canal avec une intensité de signal supérieure à la valeur de seuil prédéterminée, création d'une liste concernant les réseaux accessibles, évaluation de la liste concernant les réseaux accessibles au moyen d'une liste de priorité (C) et sélection du réseau, parmi les réseaux accessibles, qui est sur le dessus de la liste de priorité (D).

8. Procédé selon la revendication 7, **caractérisé en ce que** le dit algorithme de sélection de réseau décrit différents modes pour le dit terminal à abonnements multiples, ces modes étant donnés par :
(a) le mode « départ », dans lequel le dit terminal est arrêté et ce terminal passe en mode « évaluation » lorsqu'il est démarré ;
(b) le mode « évaluation », dans lequel le terminal balaie les canaux utilisables, identifie différents réseaux d'accès et crée une liste relative aux réseaux accessibles, la liste relative aux réseaux accessibles est évaluée au moyen de la liste de priorité active, et le réseau qui est sur le dessus de la liste de priorité est sélectionné ;
(c) le mode « connexion », dans lequel le dit terminal se connecte au réseau sélectionné dans le mode « évaluation » pour montrer qu'il est actif, de sorte que le dit terminal passe en mode « enregistré » ;
(d) le mode « enregistré », dans lequel le dit terminal est enregistré comme utilisateur actif du dit réseau d'accès sélectionné, et le dit terminal balaie continuellement les canaux dans le dit réseau d'accès et évalue ces réseaux en relation à la dite liste de priorité et, si aucun autre réseau d'accès de plus haute priorité que celui dans lequel le terminal est déjà enregistré n'est trouvé, le terminal reste enregistré dans le même réseau ; si un réseau de plus haute priorité est trouvé, le dit terminal passe dans le mode « attente »-(1); si le dit terminal pendant l'évaluation des canaux radio trouve que l'intensité de signal en provenance du réseau sélectionné descend au-dessous d'une limite prédéterminée, le dit terminal passe en mode « déconnexion »-(2) ;
(e) le mode « attente »-(1), dans lequel le dit terminal s'assure que la réception en provenance du nouveau réseau n'était pas temporaire et, si la réception en provenance du nouveau réseau de plus haute priorité existe encore après x secondes, le dit terminal passe en mode « déconnexion »-(1) ; sinon, le terminal revient au mode « enregistré » et reste enregistré dans le même réseau que précédemment ;
(f) le mode « déconnexion »-(1), dans lequel le dit terminal se déconnecte de l'ancien réseau dans lequel il était enregistré, après quoi le dit terminal passe en mode « connexion » où il se connecte au nouveau réseau de plus haute priorité ;
(g) le mode « déconnexion »-(2), dans lequel le dit terminal dans le mode « enregistré » trouve que l'intensité du signal reçu descend au-dessous d'une valeur de seuil prédéterminée, et il se déconnecte de la même façon que dans le mode « déconnexion »-(1), et passe ensuite au mode « attente »-(2) ;
(h) le mode « attente »-(2), dans lequel le dit terminal continue à évaluer la réception en provenance de l'ancien réseau et, si cette réception est encore présente après x secondes, le terminal passe en mode « connexion » où il se connecte à l'ancien réseau ; si la réception en provenance de l'ancien réseau est encore absente après x secondes, le dit terminal passe au mode « évaluation » afin de démarrer une tentative pour trouver un nouveau réseau d'accès.

9. Procédé selon la revendication 8, **caractérisé en ce que**, après que le dit terminal ait changé de réseau, il doit s'écouler au moins y secondes, après le changement, avant que le dit terminal essaie de revenir à nouveau au premier réseau.

10. Procédé selon la revendication 9, **caractérisé en ce que** les dites variables de temps x et respectivement y sont estimées à 5 secondes et respectivement 30 secondes.
